Europäisches Patentamt

European Patent Office

Office européen des brevets

(11) Publication number: **0 042 747**
**B1**

(12) **EUROPEAN PATENT SPECIFICATION**

(45) Date of publication of patent specification: **05.12.84**

(51) Int. Cl.³: **C 22 B 59/00, C 01 F 17/00,**
**B 01 J 19/08**

(21) Application number: **81302785.1**

(22) Date of filing: **19.06.81**

(54) **Method of treating rare-earth minerals or concentrates.**

(30) Priority: **20.06.80 JP 84362/80**

(43) Date of publication of application:
**30.12.81 Bulletin 81/52**

(45) Publication of the grant of the patent:
**05.12.84 Bulletin 84/49**

(84) Designated Contracting States:
**DE FR GB IT**

(56) References cited:
**FR-A-2 059 215**
**US-A-2 167 718**
**US-A-2 250 851**
**US-A-3 341 437**
**US-A-3 383 294**
**US-A-3 619 128**

(73) Proprietor: **INOUE-JAPAX RESEARCH**
**INCORPORATED**
**5289 Aza Michimasa Nagatsudamachi Midoriku**
**Yokohamashi Kanagawaken (JP)**

(72) Inventor: **Inoue, Kiyoshi**
**3-16-8 Kamiyoga**
**Setagayaku Tokyo (JP)**

(74) Representative: **Saunders, Harry**
**SAUNDERS AND DOLLEYMORE European**
**Patent Attorneys 2 Norfolk Road**
**Rickmansworth Hertfordshire WD3 1JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to a dissociation technique customarily encountered in the refining of rare-earth materials. More particularly, it relates to a new and improved method of treating rare-earth minerals or concentrates, e.g. monazite and/or bastnaesite, to dissociate them into a rare-earth compound, e.g. $(R(OH)_3$, from which the desired rare-earth element $R$, such as lanthanum, cerium, praseodymium, neodymium, samarium or gadolinium, or a combination of them or "misch metal" (hereinafter referred to generally as rare-earth substance) can readily be recovered.

It is known that rare-earth substances may be extracted from a variety of source minerals such as monazite, bastnaesite, gadolinite and xenotime which contain rare-earth concentrates in the form of $[Th,R]PO_4$, $RFCO_3$, $(Be,Fe)R_2Si_2O_{10}$ and $RPO_4$, respectively. In refining, it is necessary therefore to treat each of these source materials or rare-earth concentrates to separate or free the rare-earth compound from the other component parts. This separation or dissociation step has heretofore been carried out purely chemically. Thus, monazite, bastnaesite or xenotime has been treated with sulphuric acid, sodium sulphate, sodium hydroxide, hydrogen chloride and/or ammonium chloride to yield the rare-earth compound in the form of $R(OH)_3$ or $R_2O_3$, separated from thorium sulphate, hydrogen phosphate, sodium sulphate, carbon dioxide, silicon fluoride, hydrogen fluoride, sodium phosphate, sodium hydroxide, thorium hydroxide, thorium ions and sulphate and/or phosphate radicals.

Not only do these prior dissociation processes require a high concentration of the reactant, $H_2SO_4$, $NaSO_4$, HCL, $NH_3Cl$, which adds to cost, but they also require a relatively high reaction temperature amounting to 200 to 250°C or around 150°C maintained for a period of several hours. Furthermore, large amounts of noxious gases such as $SO_2$ $SO_4$ and HF and noxious alkaline mists may unavoidably be generated, necessitating a large and costly gas-treatment facility. It should be noted therefore that the prior dissociation processes are undesirable or unsatisfactory not only from energy and resource saving standpoints but from an economic consideration of the equipment as well as the cost of the rare-earth elements that are produced thereby.

Another problem encountered heretofore in the rare-earth material field is that one existing dissociation process (e.g. the alkaline dissociation process) applicable to one particular rare-earth mineral (e.g. monazite) is generally not applicable to another mineral (e.g. bastnaesite). Thus, where two different types of the rare-earth source are present in the same mineral as, for example, that available from the Baiyun mine in China, which contains 40% monazite and 60% bastnaesite, the prior-art techniques have been prohibitively inefficient or even impractical.

US patent specifications Nos. 3 341 437 and 3 383 294 relate respectively to electrolytic methods for producing rare earth oxyfluorides and electrolytic methods and apparatus for the production of rare-earth metal alloys, which involve the use of molten electrolyte material. Neither specification discloses nor suggests a treatment of pulverized mineral or concentrate mixed with an aqueous solution of an electrolyte, which is the subject of the present invention.

Accordingly, the present invention seeks to provide a new and improved method of dissociating rare-earth minerals or concentrates, e.g. monazite and/or bastnaesite, into rare-earth compounds, which method is relatively simple in procedural steps, efficient in energy and resource saving, less costly in operation, capable of producing desired rare-earth substances at a reduced cost, capable of operation either on a batch or continuous basis, applicable even to mixed rare-earth mineral concentrates (e.g. monazite plus bastnaesite) and, in practice, generally independent of the nature of the rare-earth source.

The invention also seeks to provide a rare-earth mineral or concentrate dissociation method which produces a greater yield of a convenient rare-earth compound such as a rare-earth hydroxide $(R(OH)_3)$, rare-earth sulphate $(R(SO_4)_3)$ or rare-earth chloride $(RCl_3)$, and which is capable of reducing the presence of noxious gases and fluid so as to eliminate costly and large-size anti-pollution equipment.

The method according to the invention resides in a physicochemical process and generally comprises subjecting a pulverized rare-earth mineral or concentrate (e.g. monazite, bastnaesite, gadolinite and/or xenotime) mixed with an aqueous solution of an electrolyte to an electrical discharge effected in a region between a pair of electrodes, i.e. bridging directly between the electrodes or produced between one of the electrodes and the solution of the electrolyte. The electrolyte which may be an acid (e.g. sulphuric acid), an alkali (e.g. sodium hydroxide) or a salt (e.g. sodium chloride), is present at a relatively low concentration and is used on one hand, to carry the rare-earth mineral or concentrate in a pulverized form, and on the other hand as a medium through which a high-density electrical discharge may develop. The pulverised rare-earth mineral or concentrate is thus exposed to or passed in contact with a high-density discharge and is physicochemically dissociated, in the presence of an essential component element or elements, into the desired compound, e.g. rare-earth sulphate $(R(SO_4)_3)$, rare-earth hydroxide $(R(OH)_3)$ or rare-earth chloride $(RCl_3)$ from which the required rare-earth element or substance $R$ can readily be recovered.

Specifically, the electrolyte may be at least one substance selected from a group which consists of potassium acetate, ammonia, ammonium chloride, sodium chloride, sulphuric acid, sodium carbonate, sodium hydroxide and potassium hydroxide, but preferably should be sodium hydroxide. The electrolyte may be present in solution in an amount of 5 to 25% by weight. The pulverized rare-earth mineral or concentrate may have a particle size ranging between 100 (15 × $10^{-2}$ mm) to 400 (3.75 × $10^{-2}$ mm) mesh.

The features of the present invention as well as the advantages thereof will become more readily apparent from the following description of certain embodiments thereof, with reference to the accompanying drawings, in which:

Figs. 1A and 1B are diagrammatic sectional views illustrating the principles of the present invention embodied in wide and narrow electrode spacing arrangements, respectively:

Fig. 2 is a diagrammatic view of an apparatus according to the invention; and

Fig. 3 is a diagrammatic and sectional view illustrating another apparatus according to the invention.

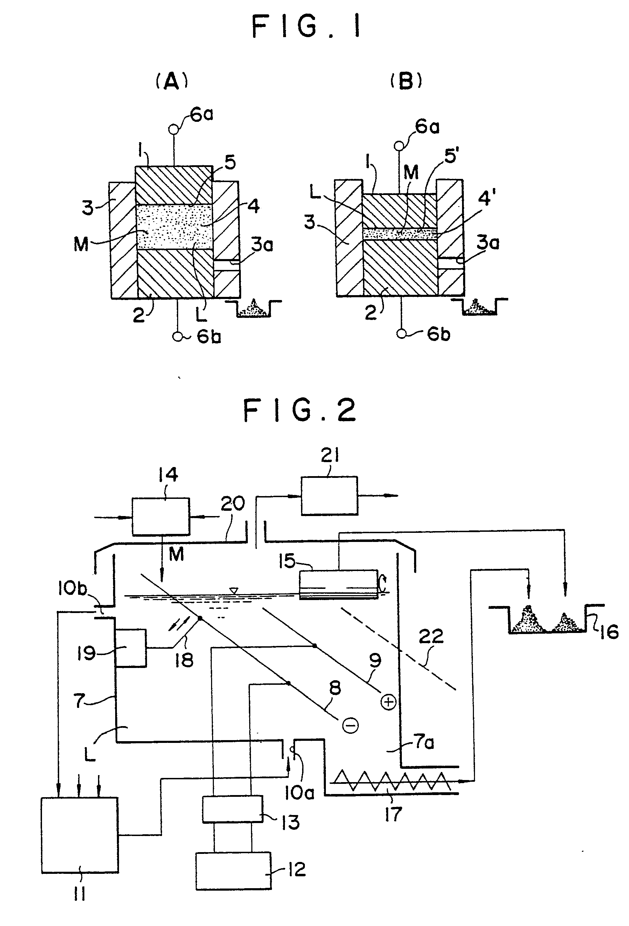

Figs. 1 A and 1B show a pair of disc, plate or block shaped electrodes 1 and 2 composed of graphite, ferrite or other suitable wear-resistant, anti-acid or anti-alkaline material, juxtaposed to define between them a relatively wide gap 4 (Fig. 1A) or a relatively narrow gap 4' (Fig. 1B) in a receptacle 3, which corresponds in shape with the electrodes 1 and 2. Both electrodes 1 and 2 are slidably located in the receptacle 3 and vertically movable therein to provide gaps 4, 4', for loading with and retaining a mass of pulverized rare-earth mineral or concentrate material $M$ mixed with a liquid electrolyte $L$ in aqueous solution. The receptacle 3 is composed of or lined with an insulating material and may be cylindrical, square or rectangular in either a vertical or horizontal plane with the chamber 5, 5' shaped accordingly to provide a tight seal. The mixture in the chamber 4, 4' contains by volume 3 to 7 parts of the material $M$ and 7 to 3 parts of the liduid $L$ or aqueous solution containing an electrolyte in an amount of 10 to 20% by weight. The particle size of the rare-earth mineral $M$ ranges, e.g. between 200 and 400 mesh (7.5 × $10^{-2}$ mm and 3.75 × $10^{-2}$ mm).

The receptacle is formed with an outlet opening 3a for the removal of the treated material $M$. After treatment of material according to the invention, the lower electrode 2 is moved to a position flush with the lower surface of the opening 3a, the upper electrode 1 then being moved down to push the treated material $M + L$ gradually out of the chamber 4, 4' through the opening 3a, for recovery. The electrodes 1 and 2 are thereafter moved back to the positions shown where the electrode 2 remains. The electrode 1 is then moved further up to open the chamber 5, 5' to allow untreated material $M + L$ to be introduced therein. When the chamber 5, 5' is elongated in a direction perpendicular to the plane of sheet of the drawing, the electrodes 1 and 2 may be arranged to be stationary and the opening 3a dispensed with. A pair of pistons may then be slidably inserted into the chamber 5, 5' which are movable back and forth, to allow for the loading and removal of the mass $M + L$ in the manner generally described.

The electrodes 1 and 2 are shown having power terminals 6a and 6b connected to a power supply (not shown) which furnishes electrical energy for physicochemically treating the rare-earth mineral or concentrate $M$, when mixed with the liquid electrolyte $L$. Thus, in each of the systems shown in Figs. 1A and 1B, it has been observed that electrical discharges develop across at least a region of the gap 4, 4' between the electrodes 1 and 2, the discharges facilitating decomposition of the mineral $M$ in the form of particles disposed within or in contact with the electrodes 1 and 2 and recombination of rare-earth elements with the essential components of the liquid $L$. While complete elimination of the generation of dust particles, gases and mists is difficult to achieve it has been found that practically no fluorine or phosphorus gases, SOx (sulphur oxides) or mists develop, which pollute the environmental air, when the systems are embodied in a preferred manner, as will be described hereinafter.

Figs. 1A and 1B illustrate systems which differ from each other in the size of gap 4, 4' between the electrodes 1 and 2. In the Fig. 1B system, electrical discharges are effected directly between the electrodes 1 and 2 via a bridge across the narrow gap 4' through the mixture of materials $M$ and $L$, thereby establishing a high-energy-density field throughout the chamber 5'. In the Fig. 1A system, on the other hand an electric current is passed between the electrodes 1 and 2 through the electrolyte $L$ to electrolytically produce a gaseous layer on the electrode which has negative polarity. Electrical discharges then develop through the gaseous layer between the negative electrode and the electrolyte $L$. When the voltage between the electrodes 1 and 2 exceeds a certain value, the surface of the cathode (negative electrode) tends to become intensively heated. However, the system of Fig. 1A makes use of the stabilized electrical discharge prior to the start of such excessive heating.

#### Example I

A liquid electrolyte $L$ consists of an aqueous solution containing 10 to 20% by weight of sodium hydroxide (NaOH) and each of various rare-earth concentrates indentified below is mixed in an amount of 30% by volume with the liquid electrolyte. The concentrate is in the form of particles having a particle size of 300 mesh (4.5 × $10^{-2}$ mm). The mixture is exposed to electrical discharges of green/blue colour which generate between an electrode and the electrolyte $L$ spaced by a distance of 5 mm from the electrode across an electrolytically produced gaseous layer. It has been found that:

1) When the rare-earth concentrate is monazite, rare-earth hydroxide $[R(OH)_3]$ and sodium phosphate $(Na_2PO_4)$ are produced. No harmful gas is produced.

2) When the rare-earth concentrate is bastnaesite, rare-earth hydroxide $[R(OH)_3]$, sodium fluoride (NaF) and sodium carbonate $(Na_2CO_3)$ are produced. No harmful gas is produced.

3) When the rare-earth concentrate is a mixture of monazite (4 parts) and bastnaesite (6 parts) rare-earth hydroxide [R(OH)₃], sodium phosphate (Na₂PO₄), sodium fluoride (NaF) and sodium carbonate (Na₂CO₃) are produced. No harmful gas is produced.

In each of the above, the yield appears to reach as high as 90 to 95%. Thus, initially the content of rare-earth elements in each concentrate is measured. After the discharge treatment the rare-earth hydroxide [R(OH)₃] sediment is collected by filtration and washed with water at 100°C. The washed rare-earth hydroxide is then treated with a 5% chloric acid solution at 100°C for 40 minutes to yield a solution. Upon adjustment of its pH value to 5.8 to 6.0, the solution is freed from sediment containing thorium hydroxide, yttrium compounds and a minor amount of rare-earth substance and is condensed by boiling. Then, by drying the condensate, the rare-earth chloride (RCl₃) is obtained and measured, the yield of rare-earth substance being 92 to 93%. Alternatively, the above solution may be neutralized with sodium hydroxide to yield a sediment containing the rare-earth hydroxide. This method also provides a yield of 92 to 93% of rare-earth substance.

### Example II

A liquid electrolyte L consists of an aqueous solution of ammonium chloride (NH₄Cl) with a mixed rare earth concentrate containing monazite (4 parts) and bastnaesite (6 parts) mixed therewith. It has been found that exposing this mixture to electrical discharges produces rare-earth hydroxides [R(OH)₃] and rare-earth chlorides (RCl₃), and in addition harmful gases such as fluorine (F₂), hydrogen fluoride (HF), chlorine (Cl₂) and ammonium fluoride (NH₄F) together with other harmful gases in smaller amounts including NH₄HF₂, PCl₃ and POCl. Simultaneously, phosphoric acid is also produced.

### Example III

A liquid electrolyte L consists of an aqueous solution of sodium chloride with monazite plus bastnaesite mixture mixed therewith. It has been found that exposing this mixture to electrical discharges produces R(OH₃) and RCl₃ together with small amounts of harmful gases including NaF, Cl₂, PCl₃ and POCl. Simultaneously, sodium phosphate (Na₃PO₄) is also produced.

### Example IV

A liquid electrolyte L consists of sulphuric acid (H₂SO₄) or an aqueous solution thereof with monazite and bastnaesite mixture mixed therewith. It has been found that exposing this mixture to electrical discharges produces rare-earth sulphate (R₂(SO₄)₃), phosphoric acid (H₃PO₄) and harmful gases including F₂, HF and SOx.

### Example V

A liquid electrolyte L consists of an aqueous solution of sodium carbonate (NaCO₃) with monazite and bastnaesite mixture mixed therewith. It has been found that exposing this mixture to electrical discharges produces rare-earth hydroxides [R(OH)₃] and sodium phosphate (Na₃PO₄). No harmful gas is produced.

### Example VI

A liquid electrolyte L consists of an aqueous solution of potassium hydroxide (KOH) with monazite and bastnaesite mixture mixed therewith. It has been found that exposing this mixture to electrical discharges produces rare-earth hydroxides [R(OH₃)], potassium phosphate (K₃PO₄), potassium fluoride (KF) and potassium carbonate (K₂CO₃). No harmful gas is produced.

Fig. 2 shows an apparatus for carrying out the method of the invention on a continuous basis. The apparatus comprises a treatment vessel 7 in which a pair of electrodes 8 and 9 are arranged. The vessel 7 contains a liquid electrolyte L which may consist of an aqueous solution containing 15% by weight sodium hydroxide (NaOH). The liquid electrolyte L is introduced into the vessel 7 through an inlet 10a formed through a floor portion thereof and is led out through an outlet 10b at an upper wall portion of the vessel 7 into a liquid processing tank 11. The tank 11 may, though not shown, have a filtration unit for removing foreign matter, a temperature control unit for cooling or maintaining the collected liquid electrolyte at a given temperature, and a concentration control unit for maintaining the concentration of the liquid electrolyte within a given range. The purified and adjusted liquid electrolyte L is returned to the treatment vessel 7 from the tank 11 through the inlet 10a.

The electrode 8 is of plate form inclined at an angle and ordinarily the cathode, whereas the counterelectrode 9 is of plate, screen or lattice form arranged in parallel with the electrode 8 with an adequate gap, and ordinarily the anode. The electrodes 8 and 9 are energized by a power supply 12. A polarity reversal switch 13 is shown connected between the power supply 12 and the electrodes 8, 9. This switch is actuated to reverse the electrode polarity to provide a measure against the contamination, wear and overheating of the electrodes 8 and 9, and may be operated periodically in response to timing signals. Alternatively, a sensor or sensors (not shown) may be provided to detect contamination, wear and/or overheating of the electrodes with respect to a preset threshold, and to act on the switch 13 when the threshold is exceeded, to reverse the electrode polarity.

Shown at 14 is a supply unit for rare-earth mineral or concentrate M to be treated, which is in a pulverized form having a suitable particle size, e.g. 200 to 400 mesh (7.5 × 10⁻² mm). The pulverized mineral or concentrate M may be mixed with liquid electrolyte L in the unit 14 to form a slurry. The pulverized mineral M, with or without the liquid electrolyte L, is fed on to the surface of the electrode 8 at an upper portion thereof and allowed to advance under gravity along this surface. In the course of its movement, the rare-earth mineral M is exposed to electrical discharges which develop on the surface of the electrode 8 as a electrolytic current is passed from the power supply 12 between the electrodes 8 and 9. A portion of the discharge-treated particles $M$ is carried with electrolytically generated gases, discharge-formed vapours and gas bubbles to the surface of the liquid electrolyte $L$ in the vessel 7. The remainder of the discharge-treated particles $M$ is allowed to move further down the surface of the electrode 8 and is deposited in a recess 7a on the floor of the vessel 7.

The scum containing the discharge-treated particles $M$ floating on the surface of the electrolyte is collected into a drum-shaped adsorption separator 15 where it is dewatered for collection into a receptacle 16. The discharge-treated particles $M$ falling into the recess 7a are caught and carried by a conveyor 17 for collection into the receptacle 16 or a separate collecting unit.

The electrode 8 is supported by an arm 18 which adjusts the angle of inclination thereof in the treatment vessel 7. The arm 18 may be vibrated by a vibrator 19 which imparts mechanical vibrations to the electrode 8, thereby facilitating or controlling the movement under gravity of the material $M$ along the electrode 8 surface. The vibrations also serve to maintain a desirable uniform distribution of the mineral particles $M$ on the electrode 8 surface.

The gases, vapours or mists evolving from the surface of the liquid $L$ in the vessel 7 are collected by a cover 20 in the space defined thereby, and are suction-drained and led to a separator unit 21.

A further discharge electrode may be provided at a position shown by broken line 22 in spaced juxtaposition to the electrode 9. A plurality of such further electrodes may also be arranged. The surface of each such electrode is furnished with material $M$ for treatment in the manner described above.

### Example VII

A rare-earth mineral concentrate consisting of 30% monazite and 70% bastnaesite contains 60% by volume of rare-earth substance. The concentrate is crushed into particles so that 99% of them have a particle size of 200 mesh ($7.5 \times 10^{-2}$ mm). The particles are introduced into an aqueous solution containing 10% by weight of sodium hydroxide (NaOH) and placed, in suspension therein with a proportion by volume of 35%, between a pair of graphite plate electrodes which are spaced apart at a distance of 30 mm from each other. The electrodes are energized with a succession of electrical pulses having a no-load voltage of 200 volts, a pulse duration of 8 microseconds, a pulse interval of 4 microseconds and a peak discharge current of 100 amperes. Intense and stabilized spark discharges develop on the surface of the negative electrode in contact with the liquid electrolyte. The discharges have a load voltage of 50 volts and a mean current of 5 amperes. It has been found that the treatment of 100 grams of the rare-earth concentrate takes 15 minutes, requires a power consumption of (50

volts $\times$ 5 amperes = 250 watts) 53.57 Kcal 86 Kcal and consumes 30 grams of sodium hydroxide. The temperature of the liquid electrolyte is maintained at or slightly above 40°C. When the sediment is washed with water at 100°C and thereafter treated with 8% HCl at 100°C for 10 to 30 minutes, 92% of the rare-earth compound is recovered, which contains 81 grams of $RCl_3$. Extraction with hydrochloric/chloric acid requires an energy of 20 Kcal and a consumption of 300 grams of HCl.

In comparison, the same rare-earth concentrate (monazite and bastnaesite mixture), according to the prior art, is capable of treatment only with the sulphuric acid process which requires energy and reacting materials for 100 grams of concentrate as detailed below. Thus, the concentrate is treated with concentrated sulphuric acid (300 to 1600 grams $H_2SO_4$), heated at 250°C for a period of 90 minutes (30 to 135 Kcal) and thereafter extracted with cooled water (extraction rate of 91%). This is followed by filtration and thereafter thorium-separation. Subsequent neutralization with sodium hydroxide (60 to 320 grams) and alkaline treatment (boiling) yields 64 grams of rare-earth hydroxide. Further extraction with hydrochloric/chloric acid requires an energy of 10 to 20 Kcal and a consumption of 300 grams of HCl to yield 81 grams of $RCl_3$.

Calculations show that according to the invention, the total cost for energy and chemicals up to the stage mentioned above is reduced to about one half when compared with the prior-art process. It should be noted further that prior-art processes in which the emission of harmful gases and mists is unavoidable make it essential to install and operate costly additional equipment for treating these emissions, while such equipment may be dispensed with or operated with less cost in the method of the invention, which eliminates or significantly reduces such emissions.

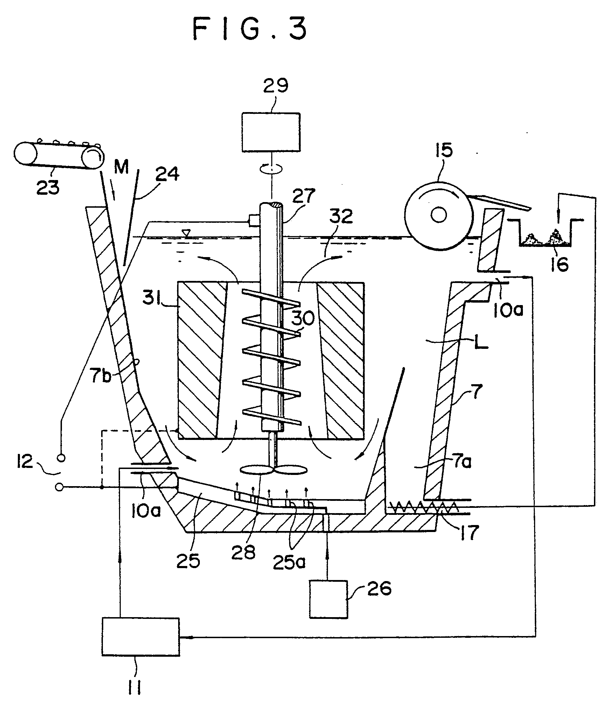

A further apparatus of the invention shown in Fig. 3 in which the same reference numerals as in Fig. 2 refer to the same or similar functional parts, is designed to discharge-treat the rare-earth mineral particles $M$ in a state of dynamic agitation with the liquid electrolyte $L$ in the treatment vessel 7.

In the arrangement of Fig. 3, a rare-earth mineral or concentrate $M$ in a pulverized form or, alternatively, in the form of a slurry of mineral particles with an aqueous solution of electrolyte $L$, is transported by a conveyor 23 into a hopper 24 which opens into the vessel 7. The treatment vessel 7 in this embodiment has a plate electrode 25 securely attached to the floor thereof. The plate electrode 25 may be porous or formed with a multiplicity of small openings 25a communicating with a gas supply 26 to inject air or a gas into the liquid $L$ in the vessel 7. A conductive rod 27 which is vertically suspended in the liquid $L$ has a fan electrode 28 secured at its lower end opposed to the plate electrode 25 and is rotated by a rotary drive 29 to produce dynamic flows of the liquid electrolyte $L$ in the vessel 7. The conductive rod 27 is formed with a helical projection 30 which, when rotated, produces upwardly moving vortices therearound. The helical projection 30 is surrounded by a cylinder 31 to facilitate the flow of liquid electrolyte as shown by arrows 32. A discharge power supply 12 is connected to the electrode 25 and the conductive rotary rod 27.

Rare-earth material *M* fed through the hopper 24 into the vessel 7 moves down under gravity along an inner wall portion 7*b* thereof and is then entrained on the liquid flow created in the vessel 7. A stream of liquid electrolyte *L* introduced through the inlet 10*a* acts to further force material *M* carried with the liquid electrolyte *L* towards the region between the stationary electrode 25 and the rotating electrode 28. Gas supplied under pressure from the source 26 is bubbled through the openings 25*a* to prevent the particles of material *M* being deposited on the electrode 28.

The rotating electrode 28 acts as the cathode and develops electrical spark discharges along its moving surface. As mentioned previously, these discharges bridge a thin uniform gaseous layer generated electrolytically on the cathode electrode surface, i.e. between the latter and the electrolyte spaced therefrom by this layer. The rare-earth mineral particles *M* are carried by the moving liquid electrolyte *L* into the region of the electrode 28 where they are exposed to the electrical discharges. As shown hereinbefore, this causes the exposed material *M* to be dissociated or reduced into one or more rare-earth compounds as have been specified. A portion of the discharge-treated material *M* rises, partly by the upward directed liquid flow and partly by the gas bubbles evolving from the electrode region, to the surface of the liquid, where it is collected by the adsorption separator 15. The rising of the discharge-treated material *M* is further facilitated by gaseous injection through the openings 25*a* from the gas supply 26. The remaining discharge-treated material *M* tends to settle towards the floor of the vessel 7 where it is caught by the conveyor 17 and led out of the vessel 7.

## Claims

1. A method of separating rare earth compounds from a pulverised rare earth mineral or concentrate characterised in that said pulverised mineral or concentrate is mixed with an aqueous solution of electrolyte, the resulting mixture is positioned between a pair of electrodes, and the electrodes energised to cause the mixture between the electrodes to be subjected to electrical discharges.

2. A method according to Claim 1 wherein said rare-earth mineral or concentrate is at least one ore selected from monazite bastnaesite, gadolinite and xenotime.

3. A method according to Claim 2 wherein said electrolyte is at least one substance selected from potassium acetate, ammonia, ammonium chloride, sodium chloride, sulphuric acid, sodium carbonate, sodium hydroxide and potassium hydroxide.

4. A method according to Claim 1 wherein said electrolyte is present in said solution in a proportion of 5 to 25% by weight.

5. A method according to Claim 1 wherein said pulverised mineral or concentrate has a particle size in the range between 100 ($15 \times 10^{-2}$ mm) and 400 ($3.75 \times 10^{-2}$ mm) mesh.

6. A method according to Claim 1 wherein said electrical discharges are effected across substantially the entire gap between said electrodes.

7. A method according to Claim 1 wherein said electrical discharges are effected on the surface of one of said electrodes which is the cathode and between said surface and said solution of electrolyte across a uniform layer of gases produced electrolytically.

8. A method according to Claim 1 wherein the mixture is retained between said electrodes in contact therewith.

9. A method according to Claim 8 wherein said mixture contains by volume 3 to 7 parts of pulverised mineral or concentrate and 7 to 3 parts of the aqueous solution of electrolyte.

10. A method according to Claim 1 wherein said mixture is advanced on a continuous support along a predetermined path and into and through said region.

11. A method according to Claim 10 wherein at least a portion of said continuous support is the surface of one of said electrodes.

12. A method according to Claim 11 wherein said one electrode is the cathode.

13. A method according to Claim 10 wherein vibrations are imparted to said support.

14. A method according to Claim 1, wherein said mixture is moved through the region between the pair of electrodes.

## Patentansprüche

1. Verfahren zum Abscheiden von Seltenerden-Verbindungen aus pulverförmig vorliegenden Seltenerden-Mineralien oder -Konzentraten, gekennzeichnet durch folgende Verfahrensschritte: das Vermischen des pulverförmig vorliegenden Minerals oder Konzentrats mit wässriger Elektrolytlösung, das Einbringen des so entstehenden Gemischs in den Aufbereitungsraum zwischen zwei Elektroden, und das Anlegen von Spannung an die Elektroden, damit das zwischen denselben befindliche Gemisch elektrischen Entladungen ausgesetzt wird.

2. Verfahren nach Anspruch 1, dadurch gekennzeichnet, daß das Seltenerden-Mineral oder -Konzentrat wenigstens eines der Erze Monazit, Bastnaesit, Gadolinit oder Xenotim enthält.

3. Verfahren nach Anspruch 2, dadurch gekennzeichnet, daß der Elektrolyt Kaliumacetat, Ammoniak, Ammoniumchlorid, Natriumchlorid, Schwefelsäure, Natriumkarbonat, Natriumhydroxid, Kaliumhydroxid oder Mischungen davon enthält.

4. Verfahren nach Anspruch 1, dadurch gekennzeichnet, daß der Elektrolytanteil in der Lösung zwischen 5 und 25 Gewichts-% liegt.

5. Verfahren nach Anspruch 1, dadurch gekennzeichnet, daß das pulverförmig vorliegende Mineral oder Konzentrat eine Partikelgröße im Bereich der Siebgröße von 100 (15 × 10⁻² mm) bis 400 (3,75 × 10⁻² mm) Maschen hat.

6. Verfahren nach Anspruch 1, dadurch gekennzeichnet, daß die elektrischen Entladungen durch den ganzen zwischen den Elektroden liegenden Zwischenraum hindurch erfgolgen.

7. Verfahren nach Anspruch 1, dadurch gekennzeichnet, daß die elektrischen Entladungen an der Oberfläche der die Kathode bildenden Elektrode und zwischen dieser Oberfläche und der Elektrolytlösung durch eine dünne, gleichmäßige Schicht von elektrolytisch erzeugten Gasen hindurch stattfinden.

8. Verfahren nach Anspruch 1, dadurch gekennzeichnet, daß das Gemisch zwischen den Elektroden und in Berührung mit diesen liegt.

9. Verfahren nach Anspruch 8, dadurch gekennzeichnet, daß das Gemisch 30 bis 70 Volumenprozent des pulverförmigen Minerals oder Konzentrats und 70 bis 30 Volumenprozent der wässrigen Elektrolytlösung enthält.

10. Verfahren nach Anspruch 1, dadurch gekennzeichnet, daß das Gemisch auf einer durchgehenden Vorrichtung längs eines bestimmten Weges in den Aufbereitungsbereich hinein und durch ihn hindurch gefördert wird.

11. Verfahren nach Anspruch 10, dadurch gekennzeichnet, daß wenigstens ein Teil der durchgehenden Tragvorrichtung durch die Oberfläche einer der Elektroden gebildet ist.

12. Verfahren nach Anspruch 11, dadurch gekennzeichnet, daß die genannte Elektrode die Kathode ist.

13. Verfahren nach Anspruch 10, dadurch gekennzeichnet, daß die Tragvorrichtung in Vibration versetzt wird.

14. Verfahren nach Anspruch 1, dadurch gekennzeichnet, daß das Gemisch wenigstens durch den zwischen den beiden Elektroden liegenden Aufbereitungsbereich hindurch bewegt wird.

**Revendications**

1. Procédé de séparation de composé de terre rare à partir d'un minéral ou d'un concentré de terre rare pulvérisée, caractérisé en ce qu'on mélange le minéral ou concentré pulvérisé avec une solution aqueuse d'un électrolyte, on place le mélange résultant entre une paire d'électrodes et on excite ces électrodes de manière à soumettre à décharges électriques le mélange se trouvant entre les électrodes.

2. Procédé suivant la revendication 1 caractérisé en ce que le minéral ou concentré de terre rare est au moins un minéral choisi parmi la monazite, la bastnaésite, la gadolinite et le xénotime.

3. Procédé suivant la revendication 2 caractérisé en ce que l'électrolyte est au moins une substance choisie parmi l'acétate de potassium, l'ammoniaque, le chlorure d'ammonium, le chlorure de sodium, l'acide sulfurique, le carbonate de sodium, l'hydroxyde de sodium et l'hydroxide de potassium.

4. Procédé suivant la revendication 1 caractérisé en ce que l'électrolyte est présent dans la solution dans une proportion allant de 5 à 25% en poids.

5. Procédé suivant la revendication 1 caractérisé en ce que les décharges électriques sont réalisées pratiquement en travers de la totalité de l'intervalle entre les électrodes.

6. Procédé suivant la revendication 1 caractérisé en ce que les décharges électriques sont réalisées pratiquement an travers de la totalité de l'intervalle entre les électrodes.

7. Procédé suivant la revendication 1 caractérisé en ce que les décharges électriques sont réalisées sur la surface de l'une des électrodes constituant la cathode et entre cette surface et la solution d'électrolyte, à travers une couche mince uniforme de gaz produits électrolytiquement.

8. Procédé suivant la revendication 1 caractérisé en ce que le mélange est retenu entre les électrodes en étant en contact avec celles-ci.

9. Procédé suivant la revendication 8 caractérisé en ce que le mélange contient, en volume, de 3 à 7 parties de minéral ou concentré pulvérulent et de 7 à 3 parties de la solution aqueuse d'électrolyte.

10. Procédé suivant la revendication 1 caractérisé en ce qu'on fait avancer le mélange sur un support continu le long d'un trajet prédéterminé et, vers et dans ladite région et à travers celle-ci.

11. Procédé suivant la revendication 10 caractérisé en ce qu'au moins une partie du support continu est constituée par la surface de l'une des électrodes.

12. Procédé suivant la revendication 11 caractérisé en ce que ladite électrode est la cathode.

13. Procédé suivant la revendication 10 caractérisé en ce que des vibrations sont appliquées au support.

14. Procédé suivant la revendication 1 caractérisé en ce que le mélange est déplacé à travers la zone comprise entre la paire d'électrodes.

# F I G . 1

(A)                    (B)

# F I G . 2

1

# FIG.3